# EUROPÄISCHE PATENTSCHRIFT

(11) **EP 1 301 981 B1**
(45) Veröffentlichungstag und Bekanntmachung des Hinweises auf die Patenterteilung: **02.11.2005**
(21) Anmeldenummer: 01947094.7
(22) Anmeldetag: 16.07.2001
(51) Int. Cl.: H02K 41/03, H02K 1/18, H02K 1/28

(54) **SEKUNDÄRTEIL EINES LINEARMOTORS UND VERFAHREN ZU DESSEN HERSTELLUNG**
SECONDARY PART OF A LINEAR MOTOR AND METHOD FOR PRODUCING THE SAME
ELEMENT SECONDAIRE D'UN MOTEUR LINEAIRE, SON PROCEDE DE PRODUCTION, MOTEUR LINEAIRE DOTE DE CET ELEMENT SECONDAIRE ET UTILISATION DE CE MOTEUR LINEAIRE

(30) Priorität: 17.07.2000 EP 00810626
(43) Veröffentlichungstag der Anmeldung: 16.04.2003
(73) Patentinhaber: INVENTIO AG, 6052 Hergiswil NW (CH)
(72) Erfinder: GRUNDMANN, Steffen, CH-8906 Bonstetten (CH)
(86) Internationale Anmeldenummer: PCT/CH2001/000441
(87) Internationale Veröffentlichungsnummer: WO 2002/007291

(56) Entgegenhaltungen:
- US-A- 4 857 786
- US-A- 4 859 974
- PATENT ABSTRACTS OF JAPAN vol. 1999, no. 09, 30. Juli 1999 (1999-07-30) -& JP 11 122904 A (HITACHI METALS LTD;HITACHI KINZOKU KIKO KK), 30. April 1999 (1999-04-30)

## Beschreibung

Sekundärteil eines Linearmotors, Verfahren zu dessen Herstellung, Linearmotor mit Sekundärteil und Verwendung des Linearmotors.

Die Erfindung betrifft einen Sekundärteil eines Linearmotors einer Aufzugsanlage nach dem Oberbegriff des Patentanspruchs 1, ein Verfahren zur Herstellung des Sekundärteils nach dem Oberbegriff des Patentanspruchs 8 und einen Linearmotor mit Sekundärteil nach dem Oberbegriff des Patentanspruchs 9.

Aus der Schrift WO-96/24189 ist ein Synchron-Linearmotor mit einem Sekundärteil bekannt, der aus einer ferromagnetischen massiven Trägerplatte mit aufgeklebten Permanentmagneten besteht. Die Permanentmagnete werden mit Hilfe von Positionierungsstrukturen auf die Trägerplatte aufgeklebt. Dieses Verfahren des Aufklebens ist aber relativ aufwendig. Üblicherweise weisen die Abmessungen der Magnete, bedingt durch den Herstellungsprozess, relativ grosse Toleranzen auf. Beim Sintern des Magnetmaterials treten Grössenänderungen auf, die schwer beherrschbar sind. Je genauer die Magnete hergestellt werden, desto teuer sind sie. Mit dem bekannten Verfahren bestehen die Probleme mit den Toleranzen weiterhin.

Weitere Linearmotoren sind ebenfalls aus US-A-4 859 974 und SP 11 122 904 bekannt.

Der Erfindung liegt eine Aufgabe zugrunde, einen Sekundärteil eines Linearmotors, ein Verfahren zu dessen Herstellung, einen Linearmotor mit Sekundärteil zu schaffen, die die obenerwähnten Nachteile nicht aufweisen und eine einfache, kompakte und toleranzbehaftete Bauweise erlauben.

Ein weiterer Vorteil ist darin zu sehen, dass der Sekundärteil und somit auch der Linearmotor kostengünstig herstellbar sind.

Diese Aufgabe wird durch die Merkmale der Ansprüche 1, 8 und 9 gelöst.

Durch die in den abhängigen Ansprüchen aufgeführten Massnahmen sind vorteilhafte Weiterbildungen und Verbesserungen der in den Ansprüchen 1, 8 und 9 angegebenen Erfindung möglich.

Ein weiterer Vorteil ist darin zu sehen, dass zur Verklebung der Magnete in dem Rahmen keine Trägerplatte nötig ist.

Vorteilhaft ist weiter die Tatsache, dass mit einem einzigen Rahmen zwei Funktionen möglich sind, das heisst der Rahmen kann die Magnete sowohl positionieren als auch tragen.

Alle erläuterten Merkmale sind nicht nur in der jeweils angegebenen Kombination, sondern auch in anderen Kombinationen oder in Alleinstellung verwendbar, ohne den Rahmen der Erfindung zu verlassen.

Verschiedene Ausführungsbeispiele der Erfindung sind in den schematischen Zeichnungen dargestellt und in der nachfolgenden Beschreibung näher erläutert. Es zeigen:
Figur 1 eine Draufsicht des Rahmens eines Sekundärteils gemäss einer Ausführungsform der Erfindung,
Figur 2 eine Globalansicht eines Permanentmagnetes gemäss einer Ausführungsform der Erfindung,
Figur 3 eine Draufsicht des Permanentmagnetes gemäss Figur 2,
Figur 4 eine Seitenansicht eines Teils eines Linearmotors gemäss einer ersten Ausführungsform der Erfindung,
Figur 5 eine Seitenansicht eines Teils eines Linearmotors gemäss einer zweiten Ausführungsform der Erfindung,
Figur 6 eine Seitenansicht eines Teils des Linearmotors gemäss Figur 5 mit Gleitführungen,
Figur 7 eine Seitenansicht eines Teils eines Linearmotors gemäss einer dritten Ausführungsform der Erfindung,
Figur 8 eine Draufsicht des Linearmotors gemäss Figur 7.

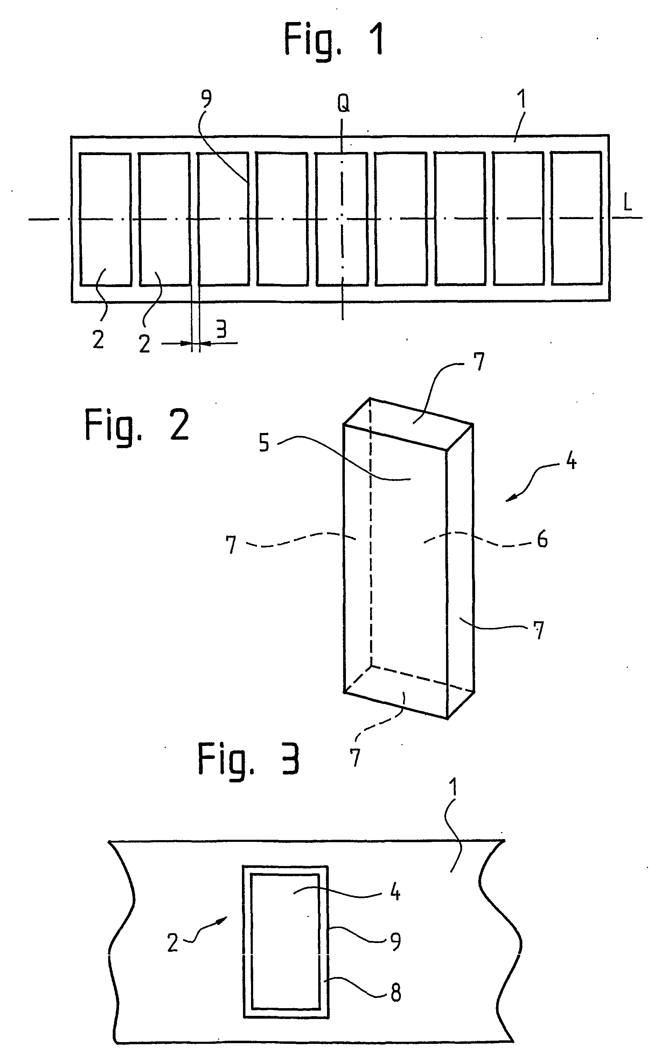

Fig. 1 zeigt einen beispielsweise massiven Rahmen 1, der eine langgestreckte Form mit einer Längsachse L und einer Querachse Q aufweist und aus nichtmagnetischem Material besteht. Die Längsachse L und die Querachse Q bilden eine Ebene E, die im folgendem als Bewegungsrichtunsebene E bezeichnet wird. Der Rahmen 1 ist als Gitter ausgebildet und weist mehrere nebeneinanderliegende gleichgrosse Freiräume 2 auf. Die Freiräume 2 sind rechteckiger Form und sind voneinander mit gleichem Abstand 3 distanziert. Die Freiräume 2 dienen dazu Permanentmagnete 4 aufzunehmen.

In Figur 2 ist ein Permanentmagnet 4 rechteckiger Form dargestellt, der eine obere Fläche 5, eine untere Fläche 6 und vier seitliche Flächen 7 aufweist. Der Permanentmagnet 4 ist so ausgebildet, dass er zu einem der Freiräume 2 des Rahmens 1 passt und in diesen eingelegt werden kann.

Figur 3 zeigt den Permanentmagnet 4 in der Draufsicht, der in einem Freiraum 2 des Rahmens 1, hier teilweise gezeichnet, angeordnet ist. Der Permanentmagnet 4 ist an seinen seitlichen Flächen 7, im folgenden auch Stirnseiten 7 genannt, mit einem Klebstoff 8 versehen. Durch den Klebstoff 8 wird der Permanentmagnet 4 in die Freiräume 2 an der inneren Oberfläche 9 des Rahmens 1 angeklebt. Der Permanentmagnet 4 wird somit mit seinen Stirnseiten 7 mit dem Rahmen 1 geklebt und vom letzten umschlossen. Der Klebstoff 8 dient automatisch zum Ausgleich der Abmessungstoleranzen der Permanentmagnete 4, die durch den Herstellungsprozess, beispielsweise durch Sintern, bedingt sind. In der Tat können die Permanentmagnete 4 Abmessungstoleranzen aufweisen, die markant sein können. Durch den Klebstoff 8 werden eventuelle Fugen zwischen Rahmen 1 und Permanentmagnet 4 gefüllt. Der Permanentmagnet 4 wird an der richtigen Stelle positioniert.

Vorzugsweise wird der Permanentmagnet 4 ausschliesslich mit seinen Stirnseiten 7 an den inneren Oberflächen 9 des Rahmens 1 verklebt.

Der Rahmen 1 hat sowohl eine tragende als auch eine positionierende Funktion und bestimmt die Genauigkeit der Magnetpositionierung. Er stellt zwar einen Anschlag beim Einkleben und/oder gegen Verschiebung oder Verdrehung der Permanentmagnete 4 dar. Die kritische Positionierung der Permanentmagnete 4 wird somit in dieser Weise elegant gelöst. Die gute und genaue Positionierung der Permanentmagnete 4 in den Sekundärteil eines Linearmotors spielt eine wichtige Rolle für die gute und effiziente Funktion des Linearmotors selbst. Die Position jedes der nebeneinanderangeordneten Permanentmagnete 4 hat einen Einfluss auf die Konstanz der Kräfte zwischen den beweglichen und den fesstehenden Teilen, die die lineare Bewegung gewährleisten sollen. Wenn die Magnete falsch positioniert sind, sind die involvierten elektromagnetischen Kräfte in der Zeit nicht konstant, was zu einer ungleichmässigen Linearbewegung des Linearmotors führt.

Eine dünne Metall- oder Kunststoffolie ist unter dem Rahmen 1 vorgesehen, auf der die Permanent-magnete befestigt sind.

Der Rahmen 1 kann beispielsweise einstückig hergestellt werden. In anderen Ausführungsformen könnte der Rahmen 1 nicht massiv sein, sondern aus zwei Blechteilen hergestellt sein.

Die Konstruktion, die durch die Einsetzung und die stirnseitige Verklebung aller Permanentmagnete 4 in den Freiräumen 2 des unmagnetischen Rahmens 1 hergestellt ist, also der Rahmen 1 mit den eingeklebten Permanentmagneten 4, bildet einen unmagnetischen, vorzugsweise eisenlosen Sekundärteil 10 eines Linearmotors 11, 11'.

Im folgendem werden die wichtigsten Schritte des Verfahrens zur Herstellung des Sekundärteils 10 erläutert:

Die Permanentmagnete 4 werden an mindestens einer ihrer Stirnseiten 7 mit einem Klebstoff 8 versehen, dann in die Freiräume 2 des Rahmens 1 eingesetzt und schliesslich an der inneren Oberfläche (9) des Rahmens 1 angeklebt.

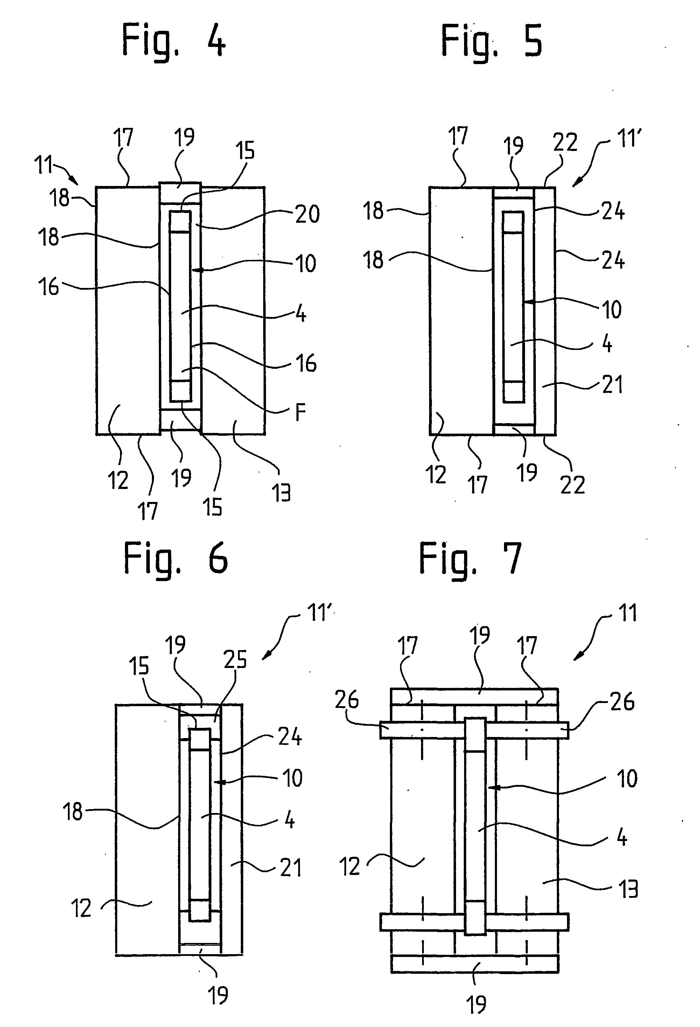

In Figur 4 ist eine Bauvariante eines Linearmotors 11 gemäss der Erfindung teilweise dargestellt. Der Linearmotor 11, vorzugsweise ein Synchronlinearmotor, umfasst einen ersten Primärteil 12 und einem zweiten Primärteil 13, zwischen denen ein eisenloser Sekundärteil 10 mit Permanentmagneten 4 verbindungslos angeordnet ist. Dieser Linearmotor 11 wird auch als Doppelstatormotor bezeichnet. Im Querschnitt gesehen, weist der Sekundärteil 10 eine rechteckige Fläche F auf, die durch zwei gegenüberliegende schmale Seiten 15 und zwei gegenüberliegende breite Seiten 16 gebildet ist. Der erste Primärteil 12 ist im Querschnitt auch rechteckiger Form und weist auch zwei gegenüberliegende schmale Seiten 17 und zwei gegenüberliegende breite Seiten 18 auf. Der zweite Primärteil 13 weist in dieser Ausführungsform die gleiche Ausbildung wie der Primärteil 12 auf.

Der erste Primärteil 12 und der zweite Primärteil 13 sind durch zwei Abstandhalter 19 beabstandet, die in der Nähe der schmalen Seiten 15 des Sekundärteils 10 und getrennt davon positioniert sind. Die Abstandhalter 19 sind vorzugsweise in der Nähe der schmalen Seiten 17 des ersten Primärteils 12 und des zweiten Primärteils 13 an den dem Sekundärteil 10 zugewandten breiten Seiten 18 des ersten Primärteil 12 und des zweiten Primärteil 13 befestigt. Es entsteht somit eine Verbindung zwischen dem ersten Primärteil 12 und dem zweiten Primärteil 13, die es erlaubt, dass beide Primärteile 12, 13 sich zusammen bewegen können. Durch die Abstandhalter 19 wird ein konstanter Abstand zwischen den beiden Primärteilen 12, 13 gewährleistet, was für eine gute und optimale Funktion des ganzen Linearmotors 11 sorgt. Die Abstandhalter 19 übernehmen somit auch die Funktion, die Anziehungskräfte zwischen den beiden Primärteilen 12, 13 aufzunehmen. Die Abstandhalter 19 sind so dimensioniert, dass zwischen dem ersten Primärteil 12 und dem Sekundärteil 10 und zwischen dem zweiten Primärteil 13 und dem Sekundärteil 10 einen Luftspalt 20, der ebenfalls für die gute und optimale Funktion des ganzen Linearmotors 11 immer konstant bleiben soll.

Der erste Primärteil 12 und der zweite Primärteil 13 weisen nicht gezeigte Wicklungen auf, die durch eine ebenfalls nicht gezeigte Energiequelle gespeist werden. Durch die elektromagnetische Wechselwirkung zwischen den Primärteilen 12, 13 und dem Sekundärteil 10 findet eine lineare Bewegung der Primäteilen 12, 13 entlang des Sekundärteils 10 und im wesentlichen parallel dazu oder umgekehrt statt, wobei die lineare Bewegung senkrecht zur Fläche F des Sekundärteils 10 erfolgt, das heisst parallel zur Bewegungsrichtungsebene E. Die beschriebene Bewegung stellt die Bewegungsrichtung B des Linearmotors 11 dar und verläuft in Figur 4 senkrecht zur Blattebene.

Aus der Figur 5 ist ein Linearmotor 11', vorzugsweise ein Synchronlinearmotor, einer zweiten Ausführungsform der Erfindung teilweise entnehmbar. Dieser Linearmotor 11' weist im wesentlichen die gleichen Elemente wie der Linearmotor 11 aus der Figur 4 auf. Somit werden gleichen Elemente mit den gleichen Bezugszeichen wie in Figur 4 bezeichnet.

In dieser Ausführungsform weist der Linearmotor 11' einen mit nicht gezeigten Wicklungen versehenen ersten Primärteil 12 und ein als magnetischer Rückfluss dienendes Element 21 auf , das vorzugsweise aus Eisen besteht. Im folgenden wird das Element 21 als Eisenelement 21 bezeichnet. Der Sekundärteil 10 befindet sich losgelöst zwischen dem ersten Primärteil 12 und dem Eisenelement 21. Das Eisenelement 21 weist im Querschnitt eine rechteckige Form mit zwei gegeüberliegenden schmalen Seiten 22 und zwei gegenüberliegenden breiten Seiten 24 auf. Die breiten Seiten 24 des Eisenelementes 21 sind genausolang wie die breiten Seiten 18 des ersten Primärteils 12. Durch die Abstandhalter 19 ist das Eisenelement 21 mit dem ersten Primärteil 12 in der Nähe der schmalen Seiten 22 des Eisenelementes 21 und der schmalen Seiten 17 des ersten Primärteils 12 fest verbunden. Das Eisenelement 21 wird durch den ersten Primärteil 12 mitgeführt. In dieser Ausfürungsform sind die Abstanhalter 19 jeweils an den dem Sekundärteil 10 zugewandten breiten Seiten 18 und 22 beziehungsweise des ersten Primärteils 12 und des Eisenelementes 21 befestigt. In dieser Variante treten grosse Anziehungskräfte zwischen dem ersten Primärteil 12 und dem Eisenelement 21 quer zur Bewegungsrichtungsebene auf, die aber hauptsächlich von den Abstandhalter 19 aufgenommen werden.

Die durch die elektromagnetischen Wechselwirkungen zwischen dem ersten Primärteil 12, dem mit Permanentmagneten 4 versehenen Sekundärteil 10 und dem Eisenelement 21 entstehenden Kräfte erzeugen eine Linearbewegung des ersten Primärteils 12 mit dem mitgeführten Eisenelement 21 in Bewegungsrichtung B und im wesentlichen parallel zu dem Sekundärteil 10 oder umgekehrt.

Mit der Konstruktion gemäss Figur 5 weist der Linearmotor 11' einen noch kompakteren Aufbau auf.

Da der Primärteil 12, 13 beziehungsweise das Eisenelement 21 sich parallel zu dem Sekundärteil 10 in Bewegungsrichtung B bewegen oder umgekehrt, lassen sich seitlichen Schwankungen senkrecht zur Bewegungsrichtungsebene E nicht vermeiden. Damit diese seitlichen Schwankungen nicht auftreten können, das heisst damit keine Gefahr besteht, dass eine Seite des Primärteils 12, 13 beziehungsweise des Eisenelementes 21 mit dem Sekundärteil 10 und umgekehrt in Berührung kommt, sind zwischen den beiden Elementen Gleitführungen nötig. Die Gleitführungen können gleichzeitig, zusätzlich zu den Abstandhaltern 19, die Anziehungskräfte zwischen den beiden Primärteilen 12, 13 beziehungsweise zwischen dem ersten Primärteil 12 und dem Eisenelemnt 21 aufnehmen, was die Funktionalität und die Stabilität des ganzen Linearmotors 11, 11' verbessert.

In Figur 6 ist eine Variante der Führung bei der Ausführungsform gemäss Figur 5 gezeigt. In der Nähe der Abstandhalter 19 und an den dem Sekundärteil 10 zugewandten breiten Seiten 18 und 24 beziehungsweise des ersten Primärteils 12 und des Eisenelementes 21 ist ein U-förmiges Gleitelement 25 befestigt, das um die beiden schmalen Seiten 15 des Sekundärteils 10 herum verschiebbar angeordnet ist. Vorzugsweise wird das Gleitelement 25 an dem ersten Primärteil 12 und am Eisenelement 21 befestigt, da sie normalerweise kürzer als der Sekundärteil 10 sind. Das Gleitelement 25 bildet somit mit dem Rahmen 1 eine Gleitführung. Als Gleitfläche wird die dem Sekundärteil 10 zugewandte Fläche des Gleitelementes 25 verwendet.

In einer bevorzugten Variante besteht das Gleitelement 25 aus POM, das heisst Polyoxymethylene, oder aus Teflon. In einer bevorzugten Ausführungsform ist das Gleitelement 25 so ausgebildet, dass es nur am Rand des Rahmens 1 gleitet.

Selbstverständlich könnte das Gleitmaterial 25 an der schmalen Seiten 15 des Sekundärteils 10 befestigt werden und gegenüber dem ersten Primäteil 12 beziehungsweise dem Eisenelement 21 verschiebbar angeornet sein. Als Gleitfläche wird in diesem Fall die dem ersten Primärteil 12 beziehungsweise dem Eisenelement 21 zugewandte Fläche des Gleitelementes 25 verwendet.

Die gleiche Konstruktion der Gleitführung gemäss Figur 6 kann auch an der Variante des Linearmotors 11 gemäss Figur 4 verwendet werden und deshalb erübrigt sich hier eine speziellere Beschreibung. Auch in diesem Fall kann das Gleitelement 25 vorzugsweise an den Primärteilen 12, 13 befestigt werden und auf dem Sekundärteil 10 gleiten oder umgekehrt.

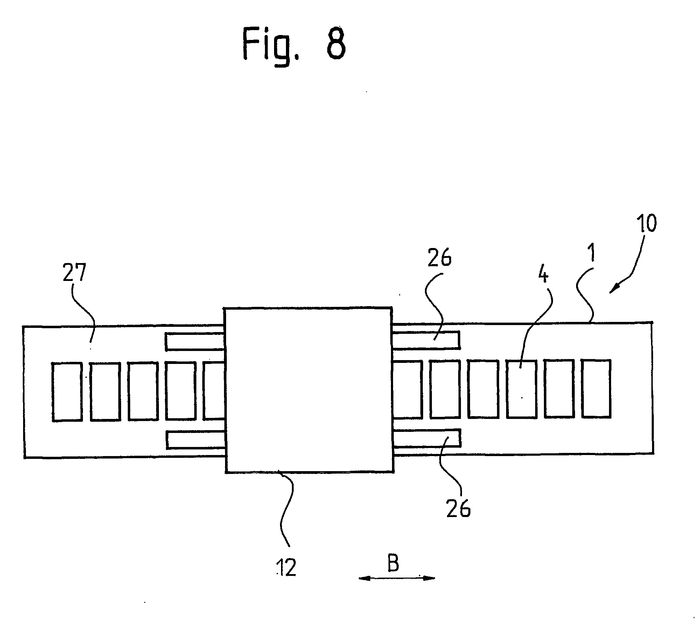

In Figur 7 ist eine weitere mögliche Variante der Führung des Linearmotors 11 nach der Ausführungsform gemäss Figur 4, also eines Doppelstatormotors gezeigt. Die gleichen Elemente werden mit den gleichen Bezugszeichen wie in Figur 4 bezeichnet. Die Abstandhalter 19 sind in diesem Fall jeweils mit den schmalen Seiten 17 beider Primärteile 12, 13 fest verbunden und erstrecken sich über eine Länge, die mindestens doppelt so gross wie eine schmale Seite 17 ist. Als Führung zwischen den Primärteilen 12, 13 und dem Sekundärteil 10 sind beispielsweise vier Rollen 26 vorgesehen. Die Rollen 26 sind an den Primärteilen 12, 13 angeordnet und stehen mit dem Rahmen 1 des Sekundärteils 10 in Wirkverbindung. Die Rollen 26 sind so angeordnet, dass sie auf den den Abstandhalter 19 zugewandten Rändern 27 des Sekundärteils 10 in Bewegungsrichtung B rollen können. Die Ränder 27 des Sekundärteils 10 sind die Teile des Rahmens 1, die sich am Rand der Permanentmagnete 4 in Bewegungsrichtung B erstrecken und keine Permanentmagnete 4 aufweisen. Das heisst in Figur 8 sind die Ränder 27 die Bereiche oberhalb und unterhalb der Permanentmagnete 4. Die Permanentmagnete 4 des Sekundärteils 10 werden somit sowohl nicht beschädigt als auch nicht beeinträchtigt in ihrer üblichen Funktion.

Figur 8 zeigt eine Draufsicht des Linearmotors 11 gemäss Figur 7, wobei klar ersichtlich sind der Rahmen 1 und die Permanentmagnete 4 des Sekundärteils 10 sowie der erste Primärteil 12 mit den Rollen 26, die auf dem Sekundärteil 10 parallel zur Bewegungsrichtungsebene E rutschen.

Die Linearmotoren 11, 11' gemäss der Erfindung sind vorzugsweise Permanentmagnet-Synchronlinearmotoren, die insbesondere zum Antrieb eines Aufzuges oder einer Aufzugstür verwendet werden.

Im Fall des Einsatzes des Linearmotors 11, 11' gemäss der Erfindung für den Antrieb von Aufzugstüren, werden normalerweise die Primärteile an den Türflügeln angeordnet und der Sekundärteil 10 fest an der Kabine oder an dem Stockwerk eines Gebäudes befestigt. Der Linearmotor 11, 11' verursacht die Bewegung der Primärteile auf dem Sekundärteil 10 und somit die Öffnung und die Schliessung der Schiebetüren des Aufzugs.

Selbstvertändlich können die Primärteile fest an der Kabine oder an dem Stockwerk eines Gebäudes befestigt sein und die Sekundärteile 10 an den Türflügel angeordnet sein. In diesem Fall werden sich die Sekundärteile in Bewegungsrichtung B bewegen, um die Schiebetüren des Aufzugs zu öffnen beziehungsweise zu schliesssen.

### Bezugszeichenliste

- 1: Rahmen
- 2: Freiraum
- 3: Abstand
- 4: Magnet
- 5: Obere Fläche des Magnets
- 6: Untere Fläche des Magnets
- 7: Seitliche Fläche des Magnets / Stirnseite
- 8: Klebstoff
- 9: Innere Oberfläche des Rahmens
- 10: Sekundärteil
- 11: Linearmotor
- 11': Linearmotor
- 12: erste Primärteil
- 13: zweite Primärteil
- 15: Schmale Seiten des Sekundärteils
- 16: Breite Seiten des Sekundärteils
- 17: Schmale Seiten des Primärteils
- 18: Breite Seiten des Primärteils
- 19: Abstandhalter
- 20: Luftspalt
- 21: Eisenelement
- 22: Schmale Seiten des Eisenelements
- 24: Breite Seiten des Eisenelements
- 25: Gleitelement
- 26: Rolle
- 27: Rand des Sekundärteils
- B: Bewegungsrichtung des Linearmotors
- E: Bewegungsrichtungsebene
- F: Fläche im Querschnitt des Sekundärteils
- L: Längsachse des Rahmens
- Q: Querachse des Rahmens

## Patentansprüche

1. Sekundärteil (10) eines Linearmotors (11,11'), insbesondere für eine Aufzugsanlage, welcher einen gitterförmigen Rahmen (1) mit Freiräumen (2) aufweist, wobei jeder Freiraum (2) einen Magnet (4) umschliesst, und wobei der Magnet (4) eine obere Fläche (5), eine untere Fläche (6) sowie mindestens eine Sirnseite (7) umfasst, die Stirnseiten (7) des Magneten (4) von den Rändern der inneren Oberfläche (9) durch eine Fuge beabstandet sind, und der Magnet (4) durch Füllen der Fuge mit Klebstoff über die Stirnseiten (7) mit dem Rahmen (1) verklebt ist, **dadurch gekennzeichnet, dass** auf einer Seite des Rahmens (1) eine Metall- oder Kunststoffolie vorgesehen ist, auf der der Magnet befestigt ist.

2. Sekundärteil nach Patentanspruch 1, **dadurch gekennzeichnet, dass** der Rahmen (1) eine langgestreckte Form aufweist.

3. Sekundärteil nach einem der hervorgehenden Patentansprüche,
**dadurch gekennzeichnet,**
**dass** der Rahmen (1) massiv ausgebildet ist oder im wesentlichen aus zwei Blechteilen besteht.

4. Sekundärteil nach einem der hervorgehenden Patentansprüche,
**dadurch gekennzeichnet,**
**dass** der Magnet (4) ein Permanentmagnet (4) ist.

5. Linearmotor mit dem Sekundärteil (10) nach einem der Patentansprüche 1 bis 4, wobei der Linearmotor (11, 11') einen ersten Primärteil (12) und einen weiteren Teil (13, 21) aufweist,
**dadurch gekennzeichnet,**
**dass** der Sekundärteil (10) sich zwischen dem Primärteil (12) und dem weiteren Teil (13, 21) befindet.

6. Linearmotor nach Patentanspruch 5,
**dadurch gekennzeichnet,**
**dass** der erste Primärteil (12) und der weitere Teil (13, 21) durch einen Abstandhalter (19) beabstandet sind.

7. Linearmotor nach Patentanspruch 5 oder 6,
**dadurch gekennzeichnet,**
**dass** der erste Primärteil (12) mindestens eine Wicklung aufweist.

8. Linearmotor nach einem der Patentansprüche 5 bis 7,
**dadurch gekennzeichnet,**
**dass** der Linearmotor (11, 11') ein Permanentmagnetsynchronmotor ist.

9. Linearmotor nach einem der Patentansprüche 5 bis 8,
**dadurch gekennzeichnet,**
**dass** der weitere Teil als magnetischer Rückfluss (21) ausgebildet ist oder einen zweiten Primärteil (13) mit mindestens einer weiteren Wicklung umfasst.

10. Verwendung des Linearmotors nach einem der Patentansprüche 5 bis 9 in einem Aufzugstürantrieb.

## Claims

1. Secondary part (10) of a linear motor (11, 11'), particularly for a lift installation, which comprises a lattice-like frame (1) with free spaces (2), wherein each free space (2) surrounds a magnet (4) and wherein the magnet (4) has an upper surface (5), a lower surface (6) and at least one end face (7), the end faces (7) of the magnets (4) are spaced from edges of the inner surface (9) by a gap and the magnet (4) is glued to the frame (1) by way of the end faces (7) by filling the gap with adhesive, **characterised in that** a metal or synthetic material foil on which the magnet is fastened is provided on one side of the frame (1).

2. Secondary part according to patent claim 1, **characterised in that** the frame (1) has an elongate form.

3. Secondary part according to one of the preceding patent claims, **characterised in that** the frame (1) is constructed to be solid or consists substantially of two sheet metal parts.

4. Secondary part according to one of the preceding patent claims, **characterised in that** the magnet (4) is a permanent magnet (4).

5. Linear motor with the secondary part (10) according to one of patent claims 1 to 4, wherein the linear motor (11, 11') comprises a first primary part (12) and a further part (13, 21), **characterised in that** the secondary part (10) is disposed between the primary part (12) and the further part (13, 21).

6. Linear motor according to patent claim 5, **characterised in that** the first primary part (12) and the further part (13, 21) are spaced apart by a spacer (19).

7. Linear motor according to patent claim 5 or 6, **characterised in that** the first primary part (12) comprises at least one winding.

8. Linear motor according to one of patent claims 5 to 7, **characterised in that** the linear motor (11, 11') is a permanent magnet synchronous motor.

9. Linear motor according to one of patent claims 5 to 8, **characterised in that** the further part is constructed as a magnetic short-circuit member (21) or comprises a second primary part (13) with at least one further winding.

10. Use of the linear motor according to one of patent claims 5 to 9 in a lift door drive.

## Revendications

1. Partie secondaire (10) d'un moteur linéaire (11, 11'), en particulier pour une installation d'ascenseur, qui comporte un cadre en forme de grille (1) avec des espaces libres (2), chaque espace libre (2) enfermant un aimant (4) et l'aimant (4) présentant une surface supérieure (5), une surface inférieure (6) ainsi qu'au moins une face frontale (7), les faces frontales (7) de l'aimant (4) étant écartées des bords de la surface intérieure (9) par un joint et l'aimant (4) étant collé avec le cadre (1) par remplissage du joint avec de la colle sur les faces frontales (7), **caractérisée en ce qu'**il est prévu sur une face du cadre (1) une feuille en métal ou en matière plastique sur laquelle est fixé l'aimant.

2. Partie secondaire selon la revendication 1, **caractérisée en ce que** le cadre (1) présente une forme allongée.

3. Partie secondaire selon l'une des revendications précédentes, **caractérisée en ce que** le cadre (1) est conçu massif ou est composé essentiellement de deux pièces en tôle.

4. Partie secondaire selon l'une des revendications précédentes, **caractérisée en ce que** l'aimant (4) est un aimant permanent (4).

5. Moteur linéaire avec la partie secondaire (10) selon l'une des revendications 1 à 4, le moteur linéaire (11, 11') présentant une première partie primaire (12) et une autre partie (13, 21), **caractérisé en ce que** la partie secondaire (10) se trouve entre la partie primaire (12) et l'autre partie (13, 21).

6. Moteur linéaire selon la revendication 5, **caractérisé en ce que** la première partie linéaire (12) et l'autre partie (13, 21) sont écartées par un écarteur (19).

7. Moteur linéaire selon la revendication 5 ou 6, **caractérisé en ce que** la première partie primaire (12) comporte au moins un bobinage.

8. Moteur linéaire selon l'une des revendications 5 à 7, **caractérisé en ce que** le moteur linéaire (11, 11') est un moteur synchrone à aimant permanent.

9. Moteur linéaire selon l'une des revendications 5 à 8, **caractérisé en ce que** l'autre partie est conçue comme un reflux magnétique (21) ou comprend une deuxième partie primaire (13) avec au moins un autre bobinage.

10. Utilisation du moteur linéaire selon l'une des revendications 5 à 9 dans un entraînement de porte d'ascenseur.
